# EUROPEAN PATENT SPECIFICATION

(11) **EP 0 425 274 B1**
(45) Date of publication and mention of the grant of the patent: **18.09.1996**
(21) Application number: 90311666.3
(22) Date of filing: 24.10.1990
(51) Int. Cl.: G06K 7/10

(54) **Separate type bar code reader**
Trennbarer Strichkodeleser
Liseuse de code à batonnets séparés

(30) Priority: 25.10.1989 JP 277589/89
(43) Date of publication of application: 02.05.1991
(73) Proprietor: FUJITSU LIMITED, Kawasaki-shi, Kanagawa 211 (JP)
(72) Inventor: Katoh, Hiroaki, Sagamihara-shi, Kanagawa, 229 (JP); Murakawa, Yoshitaka, Fuchu-shi, Tokyo, 183 (JP); Miyazaki, Toshimasa, Yamato-shi, Kanagawa, 242 (JP); Kitamura, Nobuyuki, 202 Leo-Palace, Zama-shi, Kanagawa, 228 (JP); Sato, Shinichi 101 Sanoh-Haitsu,1366, Kawasaki-shi Kanagawa, 211 (JP)
(74) Representative: Fane, Christopher Robin King

(56) References cited:
- US-A- 4 694 182
- US-A- 4 766 297

## Description

The present invention relates to bar code reading apparatus for reading bar codes printed on packages or labels of goods, and more particularly to a separable-type bar code reading apparatus comprising a main body and a sub-body detachably mounted on the main body for use as a stationary bar code reader or a hand-held bar code reader.

In recent years, point-of-sale (POS) systems have been in increasing use in department stores and supermarkets so that efficiency in entering information about sales management and products has been improving.

A POS system comprises a bar code reader for reading bar codes attached to products by scanning them with a laser light beam for conversion to a form of information suitable for computational processing, a computer for processing the resulting information, and an electronic cash register coupled between the reader and the computer for outputting information for the customer.

Bar-code readers may be of the stationary type which require the goods to be moved relative to the reader, or the hand-held type. The hand-held type includes the touch type, the pen type, the gun type, etc., which can be moved relative to the goods. The stationary bar code reader or the hand-held bar code reader is used according to the size and weight of the goods.

In shops that deal in a wide variety of goods, however, it is uneconomical to equip both types. Therefore, a device which can be used as a stationary type or a hand-held type is desired.

Conventional bar code readers are described below.

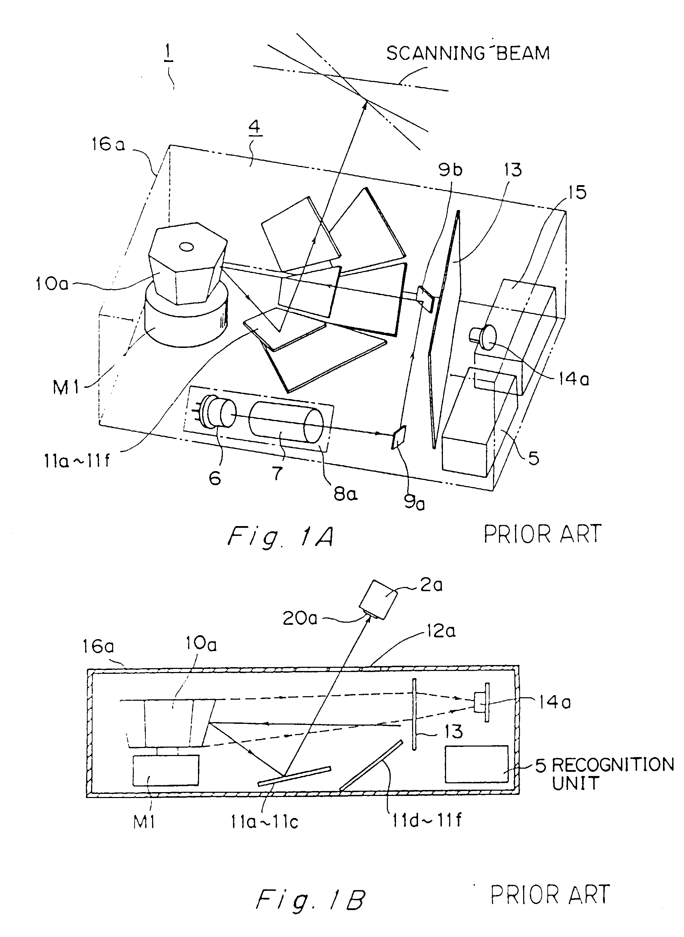

Figure 1A is a perspective view illustrating the interior of a conventional stationary-type bar code reader and Figure 1B is its side view. As shown, the stationary reader includes an optical unit 4 and a recognition unit 5. The optical unit 4 has the following functions: a bar code scanning function in which outgoing light from a light-beam-producing unit 8a (comprising a light source 6 such as, for example, a laser diode and a beam shaping lens 7) is reflected by plane mirrors 9a and 9b to a rotating polygonal mirror 10a and the reflected light from the polygonal mirror 10a is then reflected by scanning-pattern-forming mirrors 11a to 11f to produce light beams which scan a bar code 20a of a product 2a at different angles through a reading window 12a; and a photoelectric conversion function of gathering reflected light from the bar code 20a on the product 2a through the polygonal mirror 10a and the condenser lens 13 and receiving it with an optical sensor 14a for conversion to an electrical signal.

By way of example, the polygonal mirror 10a has six reflecting surfaces and makes six scans per rotation. The reflecting surfaces of the mirror are formed at different angles to the vertical axis so as to produce scanning beams in different directions. The polygonal mirror 10a is rotated by a motor M1. The motor M1, the light source 6 and the optical sensor 14a are driven by a control unit 15.

The recognition unit 5 recognizes an electrical signal from the optical sensor 14a as a bar code signal through an analog to digital converter (not shown) and a demodulator (not shown). The optical unit 4 and the recognition unit 5 are housed in a casing 16a.

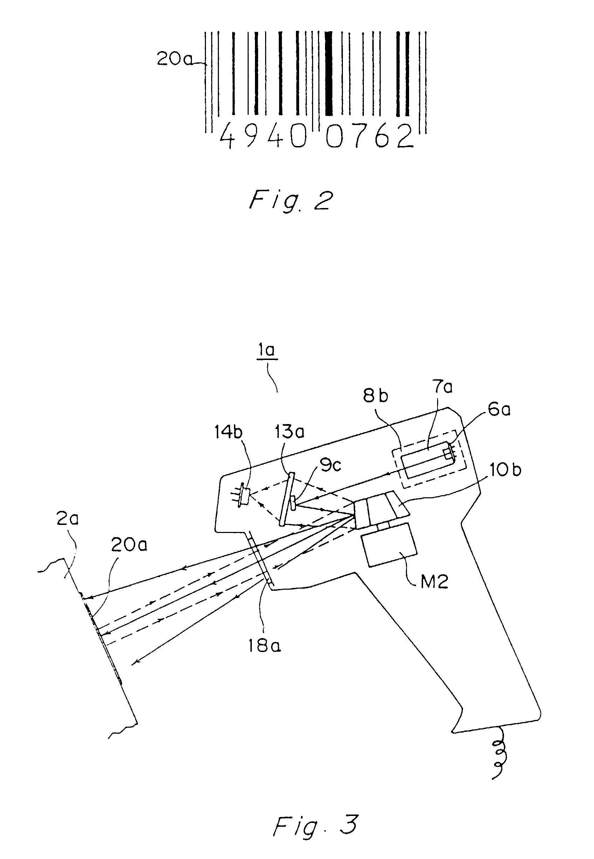

The bar code 20a is formed of alternate black and white printed stripes of different widths, as shown in Figure 2, and a character, a digit, a symbol or the like is represented by the permutation of a predetermined number of stripes.

When the product 2a is moved over the reading window 12a with the bar code 20a facing downward, while the scanning beams emerge from the reading window 12a under the control of the control unit 15 as shown in Figures 1A, and 1B, the bar code is scanned by the beams and recognized as data by the recognition unit 5 after conversion of the reflected light therefrom to an electrical signal by the optical sensor 14a.

In another stationary-type bar code reader the recognition unit is housed in a separate casing.

Stationary-type bar code readers are used where a product 2a is so small that an operator can move it over the reading window 12a with one hand and the reader can read the bar code correctly irrespective of its orientation. That is, the scanning-pattern-forming mirrors 11a to 11f enable the bar code 20a of the product 2a to be read irrespective of its orientation.

Figure 3 is a side view of a gun-type bar code reader. As shown, the gun-type bar code reader comprises a light-producing unit 8b consisting of a light source 6a of a laser diode and a beam-shaping lens 7a, a plane mirror 9c, a polygonal mirror 10b driven by a motor M2, a scanning window 18a, a condenser lens 13a and an optical sensor 14b.

As indicated by the solid arrows and the broken arrows, outgoing light from the light outputting unit 8b is reflected by the plane mirror 9c toward the polygonal mirror 10b and then radiated from the scanning window 18a to the outside as scanning beams. By putting the scanning window close to the bar code 20a printed on a product 2a, the bar code is scanned by the scanning beams. The reflected light from the bar code is gathered by the condenser lens 13a via the polygonal mirror 10b and then received by the optical sensor 14b for conversion to an electrical signal which is in turn applied to the external recognition unit (not shown).

The gun type reader 1a is used when the stationary reader 1 is difficult to use, e.g., where a product 2a is large or heavy or where there are a number of products even if they are small. With the gun type reader, however, since the scanning beams are oriented in one direction, the bar code 20a must be read in this direction.

Problems with the conventional bar code readers are summarized as follows. The stationary type reader in which an operator needs to move a product over the scanning window is difficult to operate with large or heavy products is and reduces the operator's efficiency. In such a case, the operator has to enter product information through the keyboard of an electronic cash register, or uses an additionally equipped hand reader such as the gun type reader recited above. Having a stationary-type reader as well as a hand-held reader is uneconomical.

Another conventional bar code reading apparatus, described in US-A-4,766,297, has a support unit and a portable unit supportable removably by the said support unit; the portable unit including: light-emitting means for emitting a light beam; scanning means arranged for reflecting the emitted light beam to derive therefrom a scanning beam which passes out of the portable unit via a beam-emitting aperture thereof and scans repetitively, in successive scanning cycles, in a first predetermined scanning pattern across a bar code when the portable unit is removed from the support unit; and conversion means arranged for receiving light reflected back by such a bar code when scanned by the said scanning beam, which light enters the portable unit through the said beam-emitting aperture, and operable to convert the received light into an electrical signal; and the said support unit including: mounting means for holding the portable unit in a predetermined disposition relative to the support unit, when the portable unit is supported thereby, such that the scanning beam produced by the portable unit and the said light reflected back by the bar code each pass through the support unit when the portable unit is so supported. Appended claim 1 is delimited against this document.

In this apparatus the support unit is essentially nothing more than a simple stand and the scanning pattern formed on a bar code by the portable unit when supported on the stand is the same as that formed when the unit is hand-held.

According to the present invention the said support unit has: a beam inlet portion through which the scanning beam produced by the portable unit enters the support unit, and through which also the said light reflected back by the bar code passes out of the support unit towards the said beam-emitting aperture of the portable unit, when the portable unit is supported in its said predetermined disposition by the support unit; a beam outlet portion through which the scanning beam passes out of the support unit towards the bar code, and through which also the said light reflected back by the bar code enters the support unit, when the portable unit is supported in its said predetermined disposition by the support unit; and scanning-pattern-modifying reflector means arranged for receiving the scanning beam produced by the portable unit when it is supported in its said predetermined disposition and for redirecting that beam in different directions at different times during the course of such a scanning cycle such that after passing through the beam outlet portion it scans across a bar code in a further predetermined scanning pattern different from the said first predetermined scanning pattern.

Such bar code reading apparatus embodying the present invention is adapted for use as a stationary-type bar code reader when a product is small and light and as a hand-held bar code reader when a product is large or heavy, and is therefore economical (eliminates the need for both a stationary-type reader and a hand-held reader) and has a high operability.

Reference will now be made, by way of example, to the accompanying drawings in which:
Figure 1A is a perspective view and Figure 1B is a side view of a conventional stationary bar code reader,
Figure 2 illustrates a typical bar code,
Figure 3 is a side view of a conventional gun-type bar code reader,
Figure 4 illustrates the basic arrangement of a bar code reader embodying the present invention,
Figure 5 is a side view of a bar code reader according to an embodiment of the present invention,
Figure 6 is a perspective view of the bar code reader of Figure 5, and
Figure 7 illustrates patterns of scanning beams formed by scanning-pattern-forming mirrors in the reader of Figures 5 and 6.

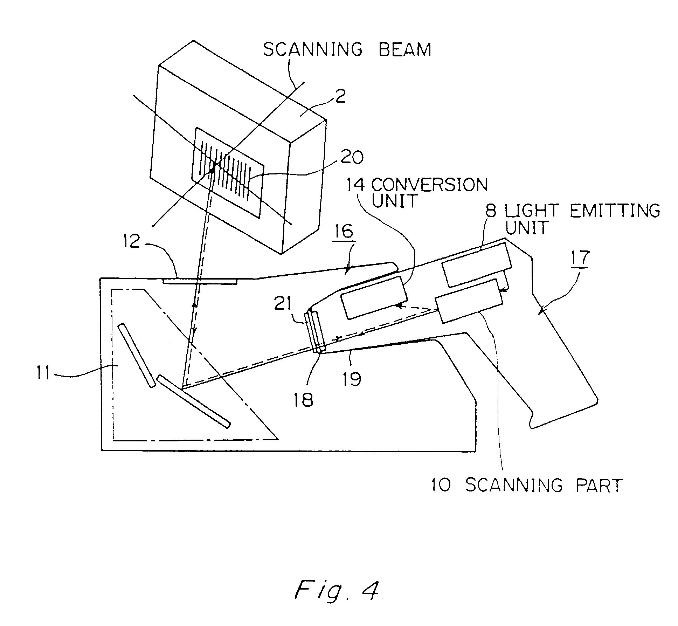

Figure 4 illustrates the basic arrangement of bar code reading apparatus embodying the present invention.

The Figure 4 bar code reader comprises a main body (support unit) 16 and a separable sub-body (portable unit) 17 which is detachably mounted on the main body 16.

The sub-body 17 comprises a light-emitting unit 8 for emitting light, a scanning unit 10 for reflecting the outgoing light from the light emitting unit 8 to produce a scanning beam, a scanning window 18 for emitting the scanning beam from the scanning unit 10 to the outside, and a conversion unit 14 for receiving light reflected from a bar code 20 printed on an object 2 resulting from a scanning with the scanning beam, and converting the received light to an electrical signal.

The main body 16 comprises a mounting portion 19 on which the sub-body is detachably mounted, a light-receiving window (beam inlet portion) 21 for receiving the scanning beam emitted through the scanning window 18 of the sub-body 17 mounted on the mounting portion 19, a scanning-pattern forming mirror unit (scanning-pattern-modifying reflector means) 11 for forming from the scanning beam received through the light-receiving window 21 a modified scanning beam that traces out a plurality of scanning lines on the bar code, and a reading window (beam outlet portion) 12 for transmitting the modified-pattern scanning beam formed by the scanning-pattern-forming mirror unit 11 to the outside.

When the sub-body 17 is mounted on the mounting portion 19 of the main body 16, the scanning beam having the modified pattern formed by the scanning-pattern-forming mirror unit 11 is directed onto the bar code 20 through the reading window 12, and the reflected light from the bar code is received by the conversion unit 14 through the reading window 12, the light-receiving window 21, the scanning window 18, etc. When the sub-body 17 is separated from the mounting portion 19 of the main body 16, the scanning beam generated by the scanning unit 10 is directed onto the bar code 20 and the light reflected therefrom is received by the conversion unit 14 through the scanning window 18, etc.

The scanning beam traces out different scanning lines on the bar code which are oriented so that they intersect one another. It is desired that one or more scanning lines should cross the bar code 20 irrespective of its orientation. If this occurs, nondirectional reading of bar codes is realised.

The scanning unit 10 can be realised by rotating a polygonal mirror with reflecting surfaces formed at different angles.

The scanning-pattern-forming mirror unit 11 can be realised by disposing a plurality of mirrors in different positions at different inclinations. Thus, a modified-pattern scanning beam is produced because during the course of a scanning cycle the scanning beam from the scanning unit 10 crosses different mirrors at different times, and so is redirected in different directions at those different times.

In operation, when the sub-body 17 is mounted on the main body 16, a scanning beam is transmitted from the sub-body 17 to the main body 16 through the scanning window 18 and light-receiving window 21 so that a scanning beam having a scanning pattern different from the scanning pattern traced out on the bar code by the basic scanning beam produced by the sub-body 17 when removed from the main body 16 is formed by the scanning-pattern-forming mirror unit 11 and then directed onto the bar code 20 printed on the external object 2 through the reading window 12. The light reflected from the bar code is converted by the conversion unit 14 to an electrical signal so that data represented by the bar code is read.

When the sub-body 16 is removed from the mounting portion 19 of the main body 16, the scanning window 18 of the sub-body 17 is brought near the bar code 20 printed on the object 2 so that the bar code 2 is irradiated by the scanning beam through the scanning window 18 and the light reflected therefrom is converted to an electrical signal to be thereby read as bar code data 20.

In the case of an object 2 which is small or light enough for an operator to move it with one hand with its bar code 20 directed toward the reading window 12, the sub-body 17 may be mounted on the main body 16 for use as a stationary-type reader. When an object 2 is large or heavy, however, the sub-body 17 can be removed from the mounting portion 19 of the main body 16 for use as a hand-held reader. Therefore, there is no necessity for two separate stationary and hand-held readers to be provided. A bar code reader embodying the present invention is thus economical.

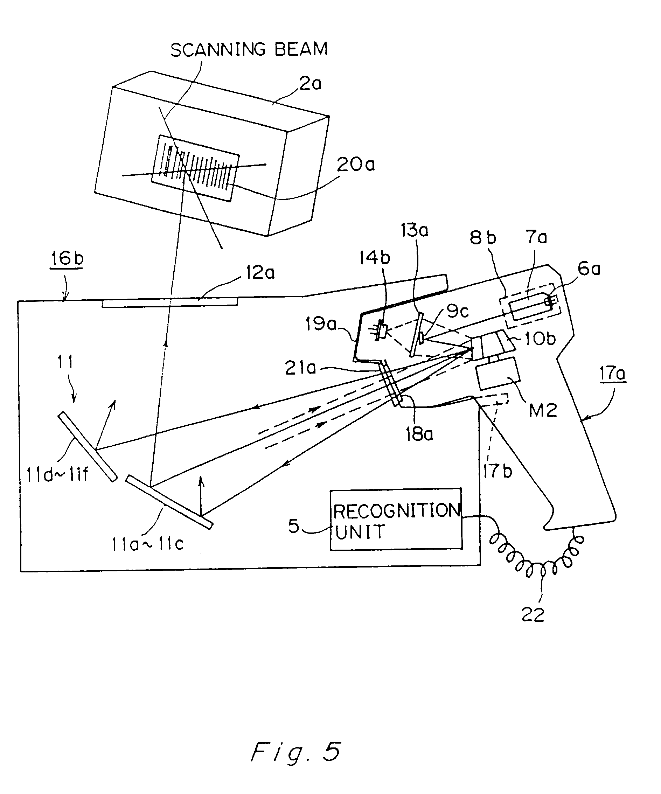

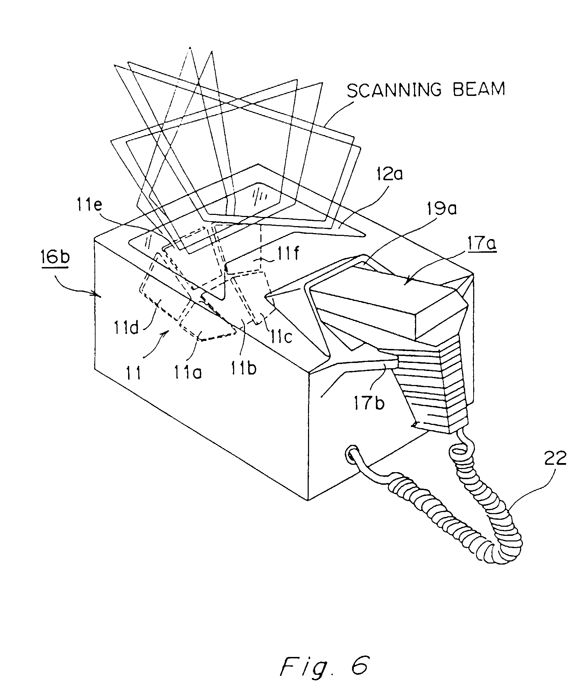

Figure 5 is a side view and Figure 6 is a perspective view of a bar code reader embodying the present invention. The same reference numbers represent the same elements in all the drawings. In Figure 5, a product 2a, a polygonal mirror 10b, an optical sensor 14b and a stationary unit 16b correspond to the object 2, the scanning unit 10, the conversion unit 14 and the main body 16 of Figure 4, respectively.

As illustrated in Figures 5 and 6, the bar code reader of this embodiment is comprised of a stationary unit 16b and a separation unit 17a. The separation unit 17a is detachably mounted on the stationary unit 16b through a mounting portion 19a.

As with the conventional gun-type reader described in conjunction with Figure 3, the separation unit 17a comprises a light-outputting unit 8b constructed from a light source 6a of a laser diode and a beam-shaping lens 7a, a mirror 9c, a polygonal mirror 10b rotated by a motor M2, a scanning window 18a, a condenser lens 13a and an optical sensor 14b.

The stationary unit 16b is provided with the mounting portion 19a on which the head of the separation unit 17a is detachably mounted. The mounting portion 19a is provided with two protruding guides 17b. The separation unit 17a fits between the guides 17b. In the back of the mounting portion 19a is provided a light-receiving window 21a for directing a scanning beam emitted from the inside of the separation unit 17a through the scanning window 18a to the inside of the stationary unit 16b when the separation unit 17a is mounted on the mounting portion 19a. The light-receiving window 21a and the scanning window 18a are covered with a transparent member, such as a glass sheet, thereby preventing dust or dirt from entering the stationary unit 16b and the separation unit 17a.

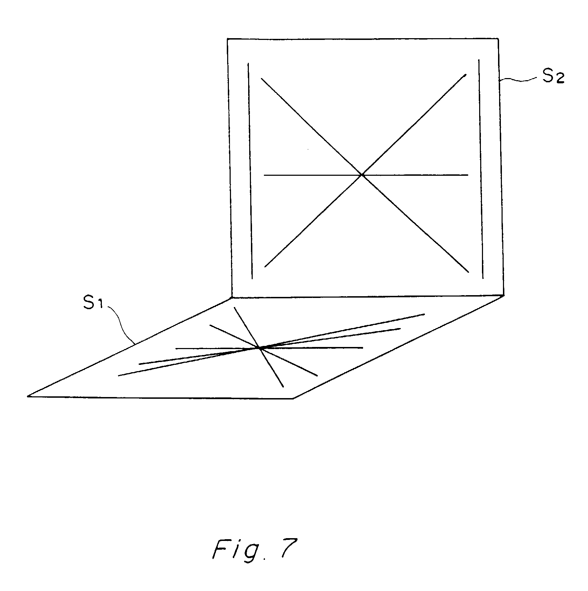

On the upper surface of the stationary unit 16b is provided a reading window 12a covered with a transparent member, such as a glass sheet, which can transmit a scanning beam. In the stationary unit 16b is installed a scanning-pattern-forming mirror unit 11 which forms a scanning beam having a modified pattern from an incident scanning beam transmitted through the light-receiving window 21a. The resulting modified-pattern scanning beam is directed to the outside through the reading window 12a. The scanning-pattern-forming mirror unit 11 comprises a plurality of mirrors 11a through 11f (six in the figure), disposed in their respective locations at different inclinations. When an incident scanning beam crosses the mirrors in sequence, the scanning beam having the modified pattern is formed. The resulting scanning beam should trace out a pattern which has lines that intersect with one another on the surface of the reading window 12a and one or more such scanning lines may be able to scan the bar code 2a when it is placed at any direction over the reading window 12a. An example of such patterns of the scanning beams is illustrated in Figure 7. This Figure indicates linear patterns formed by the scanning beam when it crosses the surface S1 of the reading window 12a and a virtual plane S2 normal to the surface S1.

The stationary unit 16b incorporates a recognition unit 5 which recognizes an electrical signal output from the optical sensor 14b of the separation unit 17a as bar code data. The electrical signal is fed to the recognition unit 5 via a cable 22 connected between the separation unit 17a and the stationary unit 16b.

With the construction described above, the separation unit 17a can be mounted on the stationary unit 16b for use as a stationary-type bar code reader for a product 2a which is small or light enough to allow an operator to move it with one hand, with the bar code 20a directed toward the reading window 12a. In this case, light from the light-outputting unit 8b of the separation unit 17a is reflected by the mirror 9c and the polygonal mirror 10b to form a scanning beam. The scanning beam is transmitted into the stationary unit 16b through the scanning window 18a and the light-receiving window 21a. It is then reflected by the scanning-pattern-forming mirror unit 11 form a scanninq beam having a modified pattern, which is then transmitted to the outside through the reading window 12a to thereby scan the bar code 20a of the product 2a. Part of the light reflected from the bar code follows the reverse path of the scanning beam, that is, it falls onto the polygonal mirror 10b through the reading window 12a, the scanning-pattern-forming mirror unit 11, the light-receiving window 21a and the scanning window 18a, and the light reflected from the polygonal mirror 10b is received by the optical sensor 14b through the condenser lens 13a and is then converted to an electrical signal. The electrical signal is fed to the recognition unit 5 via the cable 22 to be read as bar code data.

When the product 2a is so large or heavy that the use of the stationary type reader is difficult, the separation unit 17a is removed from the mounting portion 19 for use a hand type reader. In this case, as described in conjunction with Figure 3, the scanning window 18a of the separation unit 17a is held near the bar code 20a printed on the product 2a so that the bar code is scanned by the scanning beam from the scanning window 18a. Part of the light reflected from the bar code is received by the optical sensor 14b through the scanning window 18a, the polygonal mirror 10b and the condenser lens 13a for conversion to an electrical signal. As described above, the electrical signal is fed to the recognition unit 5 to be read as bar code data.

Thus, a reader embodying the present invention can be used selectively as a stationary-type or a hand-held reader according to the size or weight of a product. This is very economical because two different types of readers need not be equipped separately.

In the present invention, the forms of the main body 16 (stationary unit 16b) and the separation unit 17 (17b) are not limited to those of the embodiment described. Various forms may be adopted. In particular, the separation unit 17 (17b) need not be of the gun type. Any form can be adopted providing it is easy for an operator to hold and operate. The structure of the mounting portion 19 (19a) may also be modified variously, providing the separation unit 17 (17b) can be securely mounted on the main body 16 (stationary unit 16b).

As described above, in a bar code reader embodying the present invention, by detachably mounting the separation unit 17 incorporating the light-outputting unit 8, the scanning unit 10 and the conversion unit 14 on the main body 16 incorporating the scanning-pattern-forming mirror unit 11, the separation unit 17 may be mounted on the main body 16 for use as a stationary type reader where a product is of a size or weight which allows an operator to perform a read operation on its bar code using one hand.

Where a product is too large or heavy for the stationary-type reader to be conveniently used, the separation unit 17 is removed from the main body 16 for use as a hand-held reader. This will improve the work efficiency of the operator. In addition, it is economical because a stationary-type bar code reader and a hand-held bar code reader need not be provided separately.

## Claims

1. Bar code reading apparatus having a support unit (16) and a portable unit (17) removably supported by the said support unit;
the portable unit (17) including:
light-emitting means (8) for emitting a light beam;
scanning means (10) arranged for reflecting the emitted light beam to derive therefrom a scanning beam which passes out of the portable unit via a beam-emitting aperture (18) thereof and scans repetitively, in successive scanning cycles, in a first predetermined scanning pattern across a bar code when the portable unit is removed from the support unit; and
conversion means (14) arranged for receiving light reflected back by such a bar code when scanned by the said scanning beam, which light enters the portable unit through the said beam-emitting aperture (18), and operable to convert the received light into an electrical signal;
and the said support unit (16) including:
mounting means (19) for holding the portable unit (17) in a predetermined disposition relative to the support unit, when the portable unit is supported thereby, such that the scanning beam produced by the portable unit and the said light reflected back by the bar code each pass through the support unit when the portable unit is so supported;
characterised in that the said support unit has:
a beam inlet portion (21) through which the scanning beam produced by the portable unit enters the support unit, and through which also the said light reflected back by the bar code passes out of the support unit towards the said beam-emitting aperture (18) of the portable unit, when the portable unit is supported in its said predetermined disposition by the support unit;
a beam outlet portion (12) through which the scanning beam passes out of the support unit towards the bar code, and through which also the said light reflected back by the bar code enters the support unit, when the portable unit is supported in its said predetermined disposition by the support unit; and
scanning-pattern-modifying reflector means (11) arranged for receiving the scanning beam produced by the portable unit when it is supported in its said predetermined disposition and for redirecting that beam in different directions at different times during the course of such a scanning cycle such that after passing through the beam outlet portion it scans across a bar code in a further predetermined scanning pattern different from the said first predetermined scanning pattern.

2. Apparatus as claimed in claim 1, wherein the said scanning-pattern-modifying reflector means (11) comprise a plurality of differently-inclined mirrors (11a-11f), disposed in different respective locations within the support unit such that the said scanning beam produced by the portable unit when in its said predetermined disposition crosses, and is reflected by, the different mirrors in turn during such a scanning cycle.

3. Apparatus as claimed in claim 1 or 2, wherein the said support unit (16) includes recognition means (5) connected to the said conversion means (14) for deriving bar code data from the said electrical signal produced by the conversion means.

4. Apparatus as claimed in any preceding claim, wherein the said further predetermined scanning pattern is made up of a plurality of scanning lines that intersect one another and that extend in a plurality of different directions so as to scan across the bar code irrespective of its orientation relative to the support unit.

5. Apparatus as claimed in any preceding claim, wherein the said light-emitting means (8) comprise a semiconductor laser (6a) and a beam-shaping lens (7a) for shaping the light beam emitted by the said semiconductor laser.

6. Apparatus as claimed in any preceding claim, wherein the said scanning means (10) comprise a rotatable polygonal mirror (10b) having a plurality of reflecting surfaces oriented at different angles to the axis of rotation of the mirror, and a motor (M2) for rotating the said polygonal mirror.

7. Apparatus as claimed in any preceding claim, wherein the said beam-emitting aperture (18) of the portable unit (17) and the said beam inlet portion (21) of the said support unit (16) are each covered by a transparent member through which the said scanning beam can pass.

8. Apparatus as claimed in any preceding claim, wherein the said conversion means (14) comprise a condenser lens (13a) for collecting the said light reflected back from the bar code, received via the said beam-emitting aperture (18), and an optical sensor (14b) for receiving the collected light from the condenser lens.

9. Apparatus as claimed in any preceding claim, wherein the said beam-emitting aperture (18) and the said beam inlet portion (21) are opposite one another when the portable unit is supported in its said predetermined disposition by the said support unit.

## Patentansprüche

1. Strichcode-Lesevorrichtung mit einer Abstützeinheit (16) und einer tragbaren Einheit (16), die abnehmbar mittels der Abstützeinheit abgestützt ist,
wobei die tragbare Einheit (17) aufweist:
eine Lichtabgabeeinrichtung (8) zum Abgeben eines Lichtstrahls,
eine Abtasteinrichtung (10) in Anordnung zur Reflexion des abgegebenen Lichtstrahls, um von diesem einen Abtaststrahl abzuleiten, der aus der tragbaren Einheit über eine Strahlabgabeöffnung (18) derselben austritt und wiederholt, in aufeinanderfolgenden Abtastzyklen, in einem ersten vorbestimmten Abtastmuster über einem Strichcode eine Abtastung durchführt, wenn die tragbare Einheit von der Abstützeinheit entnommen ist, und
ein Umwandlungseinrichtung (14) in Anordnung zur Aufnahme des von einem solchen Strichcode bei dessen Abtastung mittels des Abtaststrahls zurückreflektierten Lichts, welches Licht in die tragbare Einheit durch die Strahlabgabeöffnung (18) hindurch eintritt, und die zur Umwandlung des empfangenen Lichts in ein elektrisches Signal nutzbar ist,
und wobei die Abstützeinheit (16) aufweist:
eine Anbringungseinrichtung (19) zum Halten der tragbaren Einheit (17) in einer vorbestimmten Anordnung zur Abstützeinheit, wenn die tragbare Einheit durch diese abgestützt ist, dies derart, daß der von der tragbaren Einheit erzeugte Abtaststrahl und das vom Strichcode zurückreflektierte Licht je durch die Abstützeinheit hindurchlaufen, wenn die tragbare Einheit so abgestützt ist,
**dadurch gekennzeichnet,** daß die Abstützeinheit aufweist:
einen Strahleinlaßbereich (21), durch den hindurch der von der tragbaren Einheit erzeugte Abtaststrahl in die Abstützeinheit eintritt und durch den hindurch auch das vom Strichcode zurückreflektierte Licht aus der Abstützeinheit heraus in Richtung auf die Strahlabgabeöffnung (18) der tragbaren Einheit austritt, wenn die tragbare Einheit in ihrer vorbestimmten Anordnung durch die Abstützeinheit abgestützt ist,
einen Strahlauslaßbereich (12), durch den hindurch der Abtaststrahl aus der Abstützeinheit heraus in Richtung auf den Strichcode austritt und durch den hindurch auch das vom Strichcode zurückreflektierte Licht in die Abstützeinheit eintritt, wenn die tragbare Einheit in ihrer vorbestimmten Anordnung durch die Abstützeinheit abgestützt ist, und
eine Abtastmuster-Veränderungsreflektoreinrichtung (11) in Anordnung zur Aufnahme des von der tragbaren Einheit bei deren Abstützung in ihrer vorbestimmten Zuordnung erzeugten Abtaststrahls und zur neuerlichen Ausrichtung dieses Strahls in unterschiedlichen Richtungen zu unterschiedlichen Zeiten während des Ablaufs eines Abtastzyklusses, dies derart, daß er nach dem Hindurchtritt durch den Strahlauslaßbereich quer über den Strichcode in einem weiteren vorbestimmten Abtastmuster, das sich von dem ersten vorbestimmten Abtastmuster unterscheidet, eine Abtastung durchführt.

2. Vorrichtung nach Anspruch 1, bei der die Abtastmuster-Veränderungsreflektoreinrichtung (11) eine Vielzahl von unterschiedlich geneigten Spiegeln (11a-11f) umfaßt, die an unterschiedlichen Stellen innerhalb der Abstützeinheit derart angeordnet sind, daß der von der tragbaren Einheit, wenn diese sich in der vorbestimmten Zuordnung befindet, erzeugte Abtaststrahl die verschiedenen Spiegel kreuzt und durch sie während dieses Abtastzyklusses der Reihe nach reflektiert wird.

3. Vorrichtung nach Anspruch 1 oder 2, bei der die Abstützeinheit (16) eine Erkennungseinrichtung (5) aufweist, die mit der Umwandlungseinrichtung (14) verbunden ist, um eine Strichcode-Information aus dem von der Umwandlungseinrichtung erzeugten elektrischen Signal abzuleiten.

4. Vorrichtung nach irgendeinem vorhergehenden Anspruch, bei der das weitere vorbestimmte Abtastmuster aus einer Vielzahl von Abtastlinien erzeugt wird, die einander kreuzen und die sich in einer Vielzahl von unterschiedlichen Richtungen erstrecken, um so eine Abtastung quer über den Strichcode unabhängig von ihrer Ausrichtung bezüglich der Abstützeinrichtung durchzuführen.

5. Vorrichtung nach irgendeinem vorhergehenden Anspruch, bei der die Lichtabgabeeinrichtung (8) einen Halbleiterlaser (6a) und eine Strahlformungslinse (7a) zur Formung des von dem Halbleiterlaser abgegebenen Lichtstrahls umfaßt.

6. Vorrichtung nach irgendeinem vorhergehenden Anspruch, bei der die Abtasteinrichtung (10) einen drehbaren polygonalen Spiegel (10b) mit einer Vielzahl von unter unterschiedlichen Winkeln zur Drehachse des Spiegels ausgerichteten Reflexionsoberflächen und einen Motor (M2) zum Drehen des polygonalen Spiegels umfaßt.

7. Vorrichtung nach irgendeinem vorhergehenden Anspruch, bei der die Strahlabgabeöffnung (18) der tragbaren Einheit (17) und der Strahleinlaßbereich (21) der Abstützeinheit (16) je durch ein transparentes Element abgedeckt sind, durch das der Abtaststrahl hindurchtreten kann.

8. Vorrichtung nach irgendeinem vorhergehenden Anspruch, bei der die Umwandlungseinrichtung (14) eine Kondensorlinse (13a) zum Sammeln des von dem Strichcode zurückreflektierten Lichts, das über die Strahlabgabeöffnung (18) empfangen wird, und einen optischen Sensor (14b) zum Empfangen des gesammelten Lichts der Kondensorlinse umfaßt.

9. Vorrichtung nach irgendeinem vorhergehenden Anspruch, bei der die Strahlabgabeöffnung (18) und der Strahleinlaßbereich (21) einander gegenüberliegen, wenn die tragbare Einheit in ihrer vorbestimmten Anordnung durch die Abstützeinheit abgestützt ist.

## Revendications

1. Dispositif de lecture de code à barres possédant une unité de support (16) et une unité portable (17) supportée, de façon amovible, par ladite unité de support;
l'unité portable (17) comprenant :
- un moyen d'émission de lumière (8) pour émettre un faisceau de lumière;
- un moyen de balayage (10) prévu pour réfléchir le faisceau de lumière émis pour en dériver un faisceau de balayage sortant de l'unité portable via une ouverture d'émission de faisceau (18) et balayant de façon répétée, lors de cycles de balayage successifs, un code à barres selon un premier motif prédéterminé de balayage lorsque l'unité portable est enlevée de l'unité de support; et
- un moyen de conversion (14) prévu pour recevoir la lumière réfléchie par un tel code à barres lors d'un balayage par le faisceau de balayage, lumière entrant dans l'unité portable via ladite ouverture d'émission de faisceau (18) et servant à convertir la lumière reçue en un signal électrique; et
ladite unité de support (16) comprenant :
- un moyen de montage (19) pour tenir l'unité portable (17) dans une position prédéterminée par rapport à l'unité de support lorsque l'unité portable est ainsi supportée de telle façon que le faisceau de balayage produit par l'unité portable et ladite lumière réfléchie par le code à barres traversent chacun l'unité de support lorsque l'unité portable est ainsi supportée;
dispositif caractérisé en ce que ladite unité de support comprend :
- une partie d'entrée de faisceau (21) par laquelle le faisceau de balayage produit par l'unité portable pénètre dans l'unité de support et par laquelle de même, ladite lumière réfléchie par le code à barres sort de l'unité de support vers ladite ouverture d'émission de faisceau (18) de l'unité portable lorsque l'unité portable est supportée dans sa dite position prédéterminée par l'unité de support;
- une partie de sortie de faisceau (12) par laquelle sort le faisceau de balayage de l'unité de support vers le code à barres et par laquelle de même, ladite lumière réfléchie par le code à barres pénètre dans l'unité de support lorsque l'unité portable est supportée dans sa dite position prédéterminée par l'unité de support; et
- un moyen de réflecteur de modification de motif de balayage (11) prévu pour recevoir le faisceau de balayage produit par l'unité portable lorsqu'elle est supportée dans sa dite position prédéterminée et pour rediriger ce faisceau dans différentes directions à différents instants lors d'un tel cycle de balayage de telle façon qu'après passage de la partie de sortie de faisceau, il balaye un code à barres selon un motif supplémentaire de balayage prédéterminé différent dudit premier motif prédéterminé de balayage.

2. Dispositif selon la revendication 1, dans lequel ledit moyen de réflecteur de modification de motif de balayage (11) comprend une pluralité de miroirs inclinés de façon différente (11a à 11f) placés sur différentes positions respectives dans l'unité de support de telle façon que ledit faisceau de balayage produit par l'unité portable, lorsqu'il est dans sa dite position prédéterminée, coupe et est réfléchi par les différents miroirs à leur tour lors d'un tel cycle de balayage.

3. Dispositif selon la revendication 1 ou 2, dans lequel ladite unité de support (16) comprend un moyen de reconnaissance (5) raccordé audit moyen de conversion (14) pour en déduire des données de code à barres à partir dudit signal électrique produit par le moyen de conversion.

4. Dispositif selon l'une quelconque des revendications précédentes, dans lequel ledit motif supplémentaire de balayage prédéterminé est constitué d'une pluralité de lignes de balayage se coupant et s'étendant dans une pluralité de directions différentes de façon à balayer le code à barres indépendamment de son orientation par rapport à l'unité de support.

5. Dispositif selon l'une quelconque des revendications précédentes, dans lequel ledit moyen d'émission de lumière (8) comprend un laser à semi-conducteur (6a) et une lentille de conformation de faisceau (7a) pour conformer le faisceau de lumière émis par ledit laser à semi-conducteur.

6. Dispositif selon l'une quelconque des revendications précédentes, dans lequel ledit moyen de balayage (10) comprend une miroir polygonal tournant (10b) possédant une pluralité de surfaces réfléchissantes orientées selon différents angles par rapport à l'axe de rotation du miroir, et un moteur (M2) pour la mise en rotation dudit miroir polygonal.

7. Dispositif selon l'une quelconque des revendications précédentes, dans lequel ladite ouverture d'émission de faisceau (18) de l'unité portable (17) et ladite partie d'entrée de faisceau (21) de ladite unité de support (16) sont recouvertes chacune d'une pièce transparente pouvant être traversée par ledit faisceau de balayage.

8. Dispositif selon l'une quelconque des revendications précédentes, dans lequel ledit moyen de conversion (14) comprend une lentille de condenseur (13a) pour récupérer ladite lumière réfléchie par le code à barres reçue, via ladite ouverture d'émission de faisceau (18), et un capteur optique (14b) pour recevoir la lumière collectée à partir de la lentille de condenseur.

9. Dispositif selon l'une quelconque des revendications précédentes, dans lequel ladite ouverture d'émission de faisceau (18) et ladite partie d'entrée de faisceau (21) sont en opposition lorsque l'unité portable est supportée dans sa dite position prédéterminée par ladite unité de support.
